# EUROPEAN PATENT APPLICATION

(11) **EP 3 056 352 A1**
(43) Date of publication of application: **17.08.2016**
(21) Application number: 14851486.2
(22) Date of filing: 15.10.2014
(51) Int. Cl.: B43K 8/02

(54) **WRITING INSTRUMENT AND METHOD FOR PROVIDING SEALING MEANS IN WRITING INSTRUMENT**

(30) Priority: 11.10.2013 JP 2013213857
(71) Applicant: Epoch Chemical Co., Ltd., Kuki-shi, Saitama 346-0106 (JP)
(72) Inventor: ODAKA, Haruo, Minamisaitama-gun Saitama 349-0203 (JP)
(74) Representative: Novagraaf Technologies
(86) International application number: PCT/JP2014/077418
(87) International publication number: WO 2015/053410

(57) **Abstract**

Problem to be Solved

To provide a writing instrument and a method for disposing of a sealing means in the writing instrument that allow automatically and efficiently assembling a means for sealing between a barrel and the in-barrel fitting part of a core holder or that of a tail plug with no need for manpower, whereby being capable of substantially improving the efficiency of assembling the writing instrument.

Solution

A writing instrument, including a core holder 3 and a tail plug 11, or core holders 3, that are fitted to a barrel 1 through a sealing means, the barrel incorporating a cotton pad or an ink reservoir, the sealing means being a ring-like seal 8, 13 that is formed by the secondary molding onto the in-barrel fitting part 7, 12 of the core holder 3 and the tail plug 11 that have been primarily molded in the molding operation by the double molding method. A belt-like gate 9, 14 is provided continuously to the ring-like seal 8, 13 such that the belt-like gate 9, 14 surrounds the peripheral face of the in-barrel fitting part 7, 12, and a recessed part 10, 15 that accommodates the ring-like seal 8, 13 and the belt-like gate 9, 14 is peripherally provided on the peripheral face of the in-barrel fitting part 7, 12.
Figure 2

## Description

### BACKGROUND OF THE INVENTION

### Field of the Invention

The present invention relates to a writing instrument and a method for disposing of a sealing means in the writing instrument, and particularly relates to a writing instrument, such as a marker of cotton pad type or direct liquid type, including a core holder and a tail plug, or core holders, that are fitted to a barrel through a sealing means, the barrel incorporating a cotton pad or an ink reservoir, and a method for disposing of the sealing means in this type of writing instrument.

### Description of the Related Art

Writing instruments, such as a marker, are divided into two broad general categories; the cotton pad type, with which a cotton pad impregnated with ink is loaded in the barrel, and the direct liquid type (raw ink type), with which the ink is directly injected into the barrel. Then, with either of these types, the core is held by a core holder disposed at an end part of a barrel such that the outer end part thereof is protruded by an appropriate amount from the core holder, and the inner end part is disposed such that it is directly imbedded in the inside of a cotton pad, or faced to the inside of an ink reservoir through a relay core.

The core holder is integrally molded with the barrel or is formed separately from the barrel before being fitted to the end part of the barrel, and in the latter case, generally a flange is formed in the middle part, the portion under the flange being fitted into the barrel. Then, in order to seal the fitted portion, an O-ring made of a silicone resin, or the like, may be fitted to that portion. The operation of fitting the O-ring is performed exclusively by manpower; the O-ring is first fitted to the lower end part of the in-barrel fitting part of the core holder, then slightly being moved up toward the flange.

However, for achieving a sufficient sealing function, it is not allowable that the O-ring is out of place, and thus the fitting operation is time-consuming and tedious. Such O-ring as a sealing means is often used in the case where the barrel and the core holder have an odd-shaped section, such as a rounded rectangular one, rather than a precise circle shaped one, however, the operation of fitting an O-ring in such a case is particularly time-consuming and tedious.

In addition, there is also available a writing instrument with which a core holder is disposed at one end of a barrel, while, at the other end, a tail plug of fitting type is disposed. Also with this type, in order to provide sealing between the tail plug and the barrel, an O-ring as a sealing means may be fitted to the peripheral face of the tail plug, however, also in that case, there arises the same problem as that with the above-mentioned core holder.

Patent Document 1: Japanese Unexamined Patent Application Publication No. 2000-335174

### SUMMARY OF THE INVENTION

As described above, the operation of fitting an O-ring to the in-barrel fitting part of a core holder or that of a tail plug is performed exclusively by manpower, and it has been time-consuming and tedious, which has demanded an improvement. The present invention has been made in view of such demand, and is intended to provide a writing instrument and a method for disposing of a sealing means in the writing instrument that allows assembling a means for sealing between a barrel and the in-barrel fitting part of a core holder or that of a tail plug to be performed efficiently in an automatic manner with no need for manpower, thereby being capable of substantially improving the efficiency of assembly the writing instrument.

The invention according to claim 1 for solving the above problems is a writing instrument, including a core holder and a tail plug, or core holders, that are fitted to a barrel through a sealing means, the barrel incorporating a cotton pad or an ink reservoir, the sealing means being a ring-like seal that is formed by the secondary molding onto the in-barrel fitting part of the core holder and the tail plug that have been primarily molded in a molding operation by the double molding method.

In one embodiment, a belt-like gate is provided continuously to the ring-like seal such that the belt-like gate surrounds the peripheral face of the in-barrel fitting part of the core holder and the tail plug, and a recessed part that accommodates the ring-like seal and the belt-like gate is peripherally provided on the peripheral face of the in-barrel fitting part of the core holder and the tail plug.

In addition, the invention according to claim 4 for solving the above problems is a method for disposing of the sealing means in a writing instrument having a core holder and a tail plug, or core holders, that are fitted to a barrel through a sealing means, the barrel incorporating a cotton pad or an ink reservoir, including: a step of using a double molding method to primarily mold the core holder and the tail plug, and then to form a ring-like seal as the sealing means by secondary molding such that the ring-like seal surrounds the in-barrel fitting part of the core holder and the tail plug.

In one embodiment, a belt-like gate is provided continuously to the ring-like seal such that the belt-like gate surrounds the peripheral face of the in-barrel fitting part of the core holder and the tail plug, and a recessed part that accommodates the ring-like seal and the belt-like gate is peripherally provided on the peripheral face of the in-barrel fitting part of the core holder and the tail plug.

The present invention is as described above, and a sealing means between the core holder and the barrel or between the core holder and the tail plug is not formed by manpower, but is formed by the double molding method, in other words, by the secondary molding after the primary molding of the core holder or the tail plug, whereby the need for time-consuming and tedious operation of assembling a sealing means, such as an O-ring, being eliminated, and thus the efficiency of assembling the writing instrument being allowed to be substantially improved.

### BRIEF DESCRIPTION OF THE DRAWINGS

Figure 1 is a front view of a writing instrument of one embodiment in accordance with the present invention with a cap being removed;
Figure 2 is a partially sectional view of a critical part of the writing instrument of one embodiment in accordance with the present invention;
Figure 3 is a partially sectional view of a critical part of the writing instrument of one embodiment in accordance with the present invention; and
Figure 4 is a partially sectional view of a critical part of a writing instrument of another embodiment in accordance with the present invention.

### DETAILED DESCRIPTION OF THE PREFERRED EMBODIMENTS

The method for disposing of a sealing means in a writing instrument in accordance with the present invention is a method for disposing of a sealing means in a writing instrument having a core holder and a tail plug, or core holders, that are fitted to a barrel through the sealing means, the barrel incorporating a cotton pad or an ink reservoir, including: a step of using a double molding method to primarily mold the core holder and the tail plug, and then to form a ring-like seal as the sealing means by the secondary molding such that the ring-like seal surrounds the in-barrel fitting part of the core holder and the tail plug.

Hereinbelow, an embodiment in accordance with the present invention will be explained with reference to the attached drawings. The writing instrument in accordance with the present invention is a writing instrument including a barrel 1 that incorporates a cotton pad or an ink reservoir, and a core holder 3 and a tail plug 11, or core holders 3, that are fitted to the barrel 1 through a sealing means, being available in a two-core type providing a core 4 at both ends of the barrel 1 (with two cores of different colors or the same color) and one-core type providing the core 4 at one end, each type being divided into the following subtypes:

### Two-core type

Subtype A: The subtype A belongs to the two-core type, the core holder 3 being fitted to the barrel 1 at both ends of the barrel 1 through the sealing means.
Subtype B: The subtype B belongs to the two-core type, the core holder 3 being fitted to one end of the barrel 1 through the sealing means, while, at the other end of the barrel 1, a core holder being integrally molded with the barrel 1.

### One-core type

Subtype C: The subtype C belongs to the one-core type, the core holder 3 being fitted to one end of the barrel 1 through the sealing means, while, at the other end of the barrel 1, the tail plug 11 being fitted to the barrel 1 through the sealing means.
Subtype D: The subtype D belongs to the one-core type, the core holder 3 being fitted to one end of the barrel 1 through the sealing means, while, at the other end of the barrel 1, the tail plug 11 being integrally molded with the barrel 1.
Subtype E: The subtype E belongs to the one-core type, a core holder that is molded integrally with the barrel 1 being provided at one end of the barrel 1, while, at the other end of the barrel 1, the tail plug 11 being fitted to the barrel 1 through the sealing means.

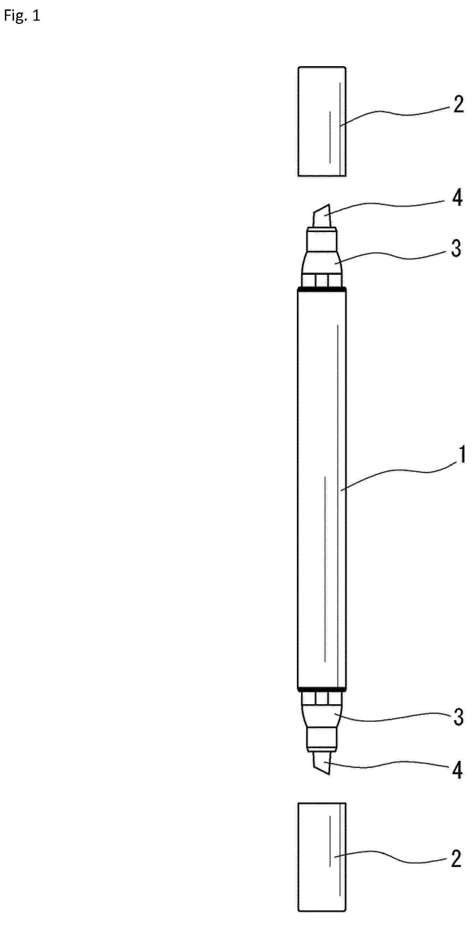

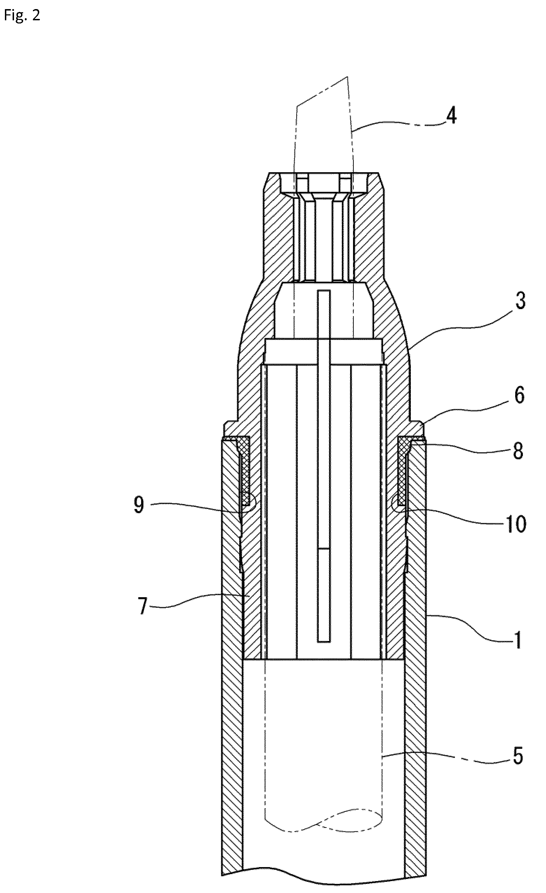

Figure 1 is a front view giving an example of appearance of the subtype A of the above-mentioned subtypes, with a cap 2 being removed from the barrel 1. At both end parts of the barrel 1, the core holder 3 holding the core 4 is fitted to the barrel 1 through the later described sealing means. As shown in Figure 2, in the inside of the barrel 1, the cotton pad 5 that is impregnated with ink (or an ink reservoir) is incorporated, the inner end part of the core 4 held by the core holder 3 being disposed so as to face to the inside of the cotton pad 5 (or faced to the inside of the ink reservoir through a relay core).

The core holder 3 is provided with a flange 6 in the middle part thereof, the portion of the core holder 3 under the flange 6, in other words, the in-barrel fitting part 7 being fitted into the barrel 1. Since the core holder 2 is pressed into the barrel 1 until the flange 6 thereof is abutted against the end face of the opening in the barrel 1, the entire in-barrel fitting part 7 is accommodated in one end part of the barrel 1. The in-barrel fitting part 7 is fitted into the barrel 1 through the sealing means, however, the sealing means in the present invention is not an O-ring that is conventionally used as a sealing means, but a ring-like seal 8, which is formed by the secondary molding of the double molding method. Here is a detailed description of a method for disposing of the ring-like seal 8.

The double molding method that is used in the present invention is also called the two-color molding method, which heat-welds two different resin materials, using a single molding machine, offering advantages that there is caused no variation between molding cycles, and a stable product quality is assured.

In the present invention, this double molding method first produces the core holder 3 by the primary molding, and then forms the ring-like seal 8 as a sealing means by the secondary molding such that the ring-like seal 8 surrounds the lower portion of the flange 6 of the core holder 3. A belt-like gate 9, which is formed like a belt under the ring-like seal 8 so as to surround the core holder 3, is the gate for introducing the molten resin into the cavity to mold the ring-like seal 8 in the mold. This belt-like gate 9 portion can also serves as a seal between the barrel 1 and the in-barrel fitting part 7 of the core holder 3.

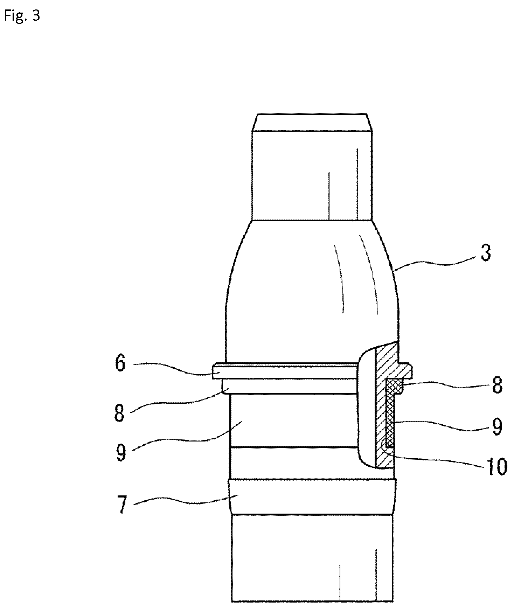

In a preferable embodiment, a recessed part 10 for accommodating the ring-like seal 8 and the belt-like gate 9 is peripherally provided on the peripheral face of the core holder 3 (see Figure 2 and Figure 3). In that case, the ring-like seal 8 and the belt-like gate 9 are tightly accommodated in the recessed part 10, whereby they being stable and free from being moved out of place, and thus fitting of the in-barrel fitting part 7 of the core holder 3 in the barrel 1 being made in a smooth manner.

Thus, by using the method in accordance with the present invention, a sealing means between the in-barrel fitting part 7 of the core holder 3 and the inner side face of the barrel 1 is not formed by manpower, but automatically formed by the double molding method, in other words, by the secondary molding after the primary molding of the core holder 3, whereby the need for time-consuming and tedious operation of assembling a sealing means, such as an O-ring, being eliminated, and thus the efficiency of assembling the writing instrument being substantially improved. This method is suited for application particularly to writing instruments with core holders having various odd-shapes other than a cylindrical shape.

The above description is directly applicable to the case where the core holder 3 that is fitted to the barrel 1 through the sealing means is provided only for one end side of the barrel 1 (the subtypes B, C, and D), however, the present invention also covers the case where the configuration of the above-mentioned core holder 3 and the method for disposing of a sealing means are applied to the tail plug 11 (the subtypes C and E).

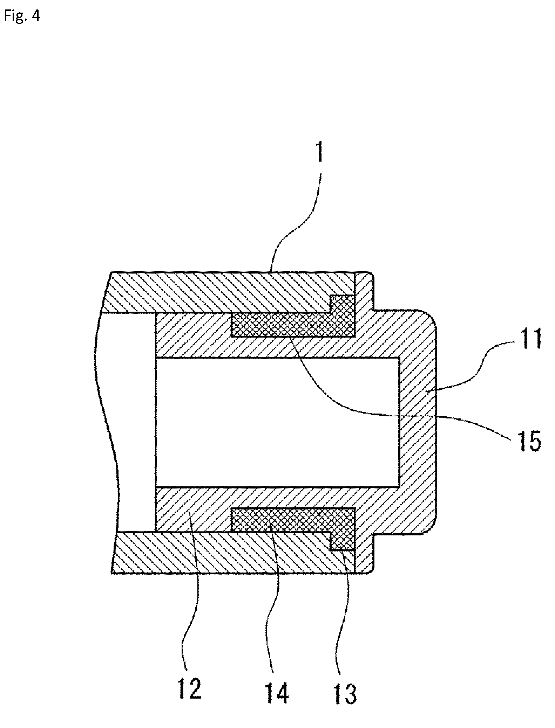

Figure 4 gives an example of application of the present invention to the tail plug 11, and as is the case with the core holder 3, the double molding method is used for making the primary molding of the tail plug 11, which is then followed by the secondary molding to form the ring-like seal 13 as a sealing means such that the ring-like seal 13 surrounds the in-barrel fitting part 12 of the tail plug 11. Then, a belt-like gate 14 is provided continuously to the ring-like seal 13 such that the belt-like gate 14 surrounds the peripheral face of the in-barrel fitting part 12. In addition, in that case, on the peripheral face of the in-barrel fitting part 12 of the tail plug 11, a recessed part 15 for accommodating the belt-like gate 14 is peripherally provided.

Hereinabove, the present invention has been explained in detail to some extent, and about the most preferred embodiment, however, since it is obvious that a wide range of different embodiments can be made without departing from the spirit and scope of the present invention, it is to be understood that the present invention is not limited to the specific embodiments thereof as defined in the appended claims.

## Claims

1. A writing instrument, comprising a core holder and a tail plug, or core holders, that are fitted to a barrel through a sealing means, the barrel incorporating a cotton pad or ink reservoir,
said sealing means being a ring-like seal that is formed by the secondary molding onto said in-barrel fitting part of said core holder and said tail plug that have been primarily molded in a molding operation by the double molding method.

2. The writing instrument according to claim 1, wherein a belt-like gate is provided continuously to said ring-like seal such that said belt-like gate surrounds the peripheral face of said in-barrel fitting part of said core holder and said tail plug.

3. The writing instrument according to claim 2, wherein a recessed part that accommodates said ring-like seal and said belt-like gate is peripherally provided on the peripheral face of said in-barrel fitting part of said core holder and said tail plug.

4. A method for disposing of said sealing means in a writing instrument having a core holder and a tail plug, or core holders, that are fitted to a barrel through a sealing means, the barrel incorporating a cotton pad or an ink reservoir, comprising:
a step of using a double molding method to primarily mold said core holder and said tail plug, and then to form a ring-like seal as said sealing means by the secondary molding such that said ring-like seal surrounds said in-barrel fitting part of said core holder and said tail plug.

5. The method for disposing of a sealing means according to claim 4, wherein a belt-like gate is provided continuously to said ring-like seal such that said belt-like gate surrounds the peripheral face of said in-barrel fitting part of said core holder and said tail plug.

6. The method for disposing of a sealing means according to claim 5, wherein a recessed part that accommodates said ring-like seal and said belt-like gate is peripherally provided on the peripheral face of said in-barrel fitting part of said core holder and said tail plug.
